# EUROPÄISCHE PATENTSCHRIFT

(11) **EP 0 921 249 B1**
(45) Veröffentlichungstag und Bekanntmachung des Hinweises auf die Patenterteilung: **14.04.2004**
(21) Anmeldenummer: 98890350.6
(22) Anmeldetag: 30.11.1998
(51) Int. Cl.: E04C 2/12, B27M 3/00, B32B 21/00

(54) **Holzbauelement**
Wooden building element
Elément de construction en bois

(30) Priorität: 05.12.1997 AT 206797; 01.04.1998 AT 56898
(43) Veröffentlichungstag der Anmeldung: 09.06.1999
(73) Patentinhaber: Santner, Johannes, Ing., 5580 Tamsweg (AT); Santner, Richard, Dipl.-Ing., 5580 Tamsweg (AT)
(72) Erfinder: Santner, Johannes, Ing., 5580 Tamsweg (AT); Santner, Richard, Dipl.-Ing., 5580 Tamsweg (AT)
(74) Vertreter: Hübscher, Helmut, Dipl.-Ing.

(56) Entgegenhaltungen:
- EP-A- 0 564 675
- CH-A- 193 552
- DE-A- 1 628 884
- DE-A- 19 604 433
- US-A- 4 700 524

## Beschreibung

Die Erfindung bezieht sich auf ein Holzbauelement aus mehreren miteinander verleimten Lagen, die aus nebeneinandergereihten, gehobelten Brettern bestehen.

Aufgrund der anisotropen Eigenschaften von Holz bedingen Temperatur- und insbesondere Feuchtigkeitsänderungen unterschiedliche Holzverformungen in tangentialer, radialer und axialer Richtung bezüglich des Baumstammes. Durch einen mehrlagigen Aufbau eines Holzbauelementes aus einander kreuzenden Brettern kann das unterschiedliche Verformungsverhalten der Bretter in Richtung ihrer Länge und Breite bei sich ändernden Temperatur- und Feuchtigkeitseinflüssen weitgehend ausgeglichen werden, weil die größere Verformung in Richtung der Brettbreite durch die geringere Längsverformung der aufgeleimten, kreuzenden Bretter gesperrt wird. Diese durch einen kreuzweisen Bretterverlauf in aufeinanderfolgenden Lagen bedingte Absperrung des Holzes bewirkt jedoch in den Brettern Eigenspannungen, die bei entsprechenden Temperatur- bzw. Feuchtigkeitseinflüssen zu Rissen führen, die unter Umständen eine Beschädigung des Holzbauelementes bedingen, vor allem bei großflächigeren Holzbauelementen. Um eine solche Rißbildung tunlichst zu vermeiden, werden die Bretter einer Lage nicht miteinander verbunden, so daß auftretende Eigenspannungen auf die einzelnen Bretter beschränkt bleiben und sich nicht über mehrere Bretter zu das Holzbauelement gefährdenden Spannungen aufbauen können (EP 0 564 675 A1). Nachteilig bei diesen bekannten abgesperrten Holzbauelementen ist allerdings, daß sich eine weitgehende Automatisierung der Herstellung solcher Holzbauelemente wegen der einzeln zu handhabenden Bretter jeder Lage kaum bewerkstelligen läßt.

In der Patentschrift CH 193552 wind ein Holzbauelement vorgeschlagen, das aus einer Anzahl flach aufeinander liegender, zusammengeleimter Bretter besteht, die je mit zueinander parallel verlaufenden Nuten versehen sind. Dadurch weist das Holzbauelement keine inneren Spannungen auf und arbeitet nicht mehr.

Darüber hinaus ist es bekannt (DE 16 28 884 A), Platten aus nebeneinandergereihten, miteinander entlang ihrer Stoßflächen verleimten Brettern zu fertigen, die entsprechend einer Stammkonizität konisch geschnitten sind, um das Stammholz vorteilhaft ausnützen zu können. Durch das Zuschneiden der Platten aus den nebeneinandergereihten, abwechselnd entgegengesetzt konisch verlaufenden Brettern kann der unvermeidbare Abfall an Holz vergleichsweise gering gehalten werden. Diese Zuschnitte eignen sich jedoch wegen der Rißgefahr nicht für den Aufbau mehrlagiger Holzbauelemente.

Der Erfindung liegt somit die Aufgabe zugrunde, ein Holzbauelement der eingangs geschilderten Art so auszugestalten, daß einerseits eine einfache Fertigung sichergestellt und anderseits eine schädigende Rißausbildung insbesondere bei Feuchtigkeitsschwankungen vermieden werden kann.

Die Erfindung löst die gestellte Aufgabe durch die Merkmalskombination des Patentanspruchs 1.

Die Verleimung der einzelnen Bretter einer Lage zu einer Platte stellt eine wesentliche Voraussetzung für eine Automatisierung der Herstellung dar, weil nicht nur die einzelnen Lagen aus den nebeneinandergereihten Brettern, sondern auch das Holzbauelement aus den jeweils eine Handhabungseinheit bildenden Platten der einzelnen Lagen hergestellt werden können. Trotz der für den Aufbau des Holzbauelementes vorteilhaften Ausbildung der einzelnen Lagen aus je einer Platte wird eine das Holzbauelement gefährdende Rißbildung vermieden, weil die Platten mit in Brettlängsrichtung verlaufenden Sollrißstellen versehen sind, die den Aufbau unzulässiger Eigenspannungen der Platte durch eine die wesentlichen Eigenschaften des Holzbauelementes nicht beeinträchtigende Rißbildung verhindern. Diese Sollrisse haben praktisch keinen Einfluß auf die Festigkeit des Holzbauelementes, weil die quer zu diesen Rissen verlaufenden Zugkräfte über die aufgeleimten benachbarten Lagen abgetragen werden. Da im Gegensatz zu den vereinzelten Brettern einer Lage der bekannten Holzbauelemente die Größe der bei bestimmten äußeren Bedingungen auftretenden Eigenspannungen nicht von Brettbreite, sondern vom gegenseitigen Abstand der Sollrißlinien abhängt, kann das Rißverhalten eines erfindungsgemäßen Holzbauelementes vorteilhaft auf die jeweils zu erwartenden Belastungen abgestimmt werden.

Die Sollrißstellen der die einzelnen Lagen bildenden Platten werden durch die Leimfuge zwischen den nur teilweise miteinander verleimten Stoßflächen nebeneinandergereihter Bretter gebildet, so daß die Leimfugen zwischen den Brettern eine Schwachstelle bilden, die zu einem Riß führt, bevor die Bretter selbst unkontrolliert reißen. Die teilweise Verleimung der Stoßflächen kann dadurch erfolgen, daß die Stoßflächen die Leimschicht nur entlang eines Streifens aufweisen. Es kann aber auch eine Sollrißlinie durch die Leimfuge erhalten werden, wenn die Stoßflächen nur in Längsabschnitten miteinander verleimt werden. Die Verleimung der Bretter einer Lage hat ja vor allem den Zweck, eine für sich handhabbare Platte für die Herstellung des Holzbauelementes sicherzustellen, was durch eine bereichsweise Verleimung der aneinanderstoßenden Bretter ohne weiteres gewährleistet werden kann.

Eine andere Möglichkeit des Ausbildung der Sollrißstellen besteht darin, die Sollrißstellen der die einzelnen Lagen bildenden Platten als Längsnuten der Bretter zumindest auf einer Plattenseite auszubilden. Der im Bereich dieser Längsnuten geschwächte Querschnitt der Bretter führt bei entsprechenden Eigenspannungen beispielsweise aufgrund einer Feuchtigkeitsabnahme zu einem Riß des Brettes entlang der Längsnut, wodurch die Eigenspannungen abgebaut werden. Diese Risse schließen sich wieder bei einer Feuchtigkeitsaufnahme.

Im Gegensatz zur Verleimung der einzelnen Bretter einer Lage zu einer Platte nimmt die gegenseitige Verleimung der einzelnen Lagen einen wesentlichen Einfluß auf die Belastbarkeit des Holzbauelementes. Trotzdem kann es für bestimmte Anwendungsfälle, in denen die mögliche maximale Belastbarkeit des Holzbauelementes nicht ausgenützt wird, von Vorteil sein, die Platten der einzelnen Lagen nur bereichsweise, vorzugsweise streifen- oder netzförmig miteinander zu verleimen, um durch die Leimschichten keine Sperrflächen zu erhalten, die beispielsweise die bauphysikalischen Eigenschaften des Holzes hinsichtlich der Wasserdampfdiffusion nachteilig beeinflussen.

Aufgrund der erfindungsgemäß vorgesehenen, in Brettlängsrichtung verlaufenden Sollrißstellen der Platten der einzelnen Lagen des Holzbauelementes können auch entsprechend einer Stammkonizität in Längsrichtung der Holzfasem konisch bzw. parallel zur konusachse geschnittene Bretter, die abwechselnd entgegengesetzt konisch bzw. trapezförmig verlaufen, zu Platten verleimt und als Lagen eines Holzbauelementes eingesetzt werden, ohne den Aufbau unzulässig hoher Eigenspannungen in den einzelnen Brettern befürchten zu müssen, die ja wegen ihres konischen Verlaufes zumindest in einem Endbereich breiter als übliche Bretter sind. Damit können nicht nur die Vorteile dieser konischen Bretter hinsichtlich der Holzausbeute, sondern auch hinsichtlich einer höheren Belastbarkeit ausgenützt werden, weil zufolge des konischen Schnittes in Längsrichtung der Holzfasern diese nicht durchtrennt werden.

In der Zeichnung ist der Erfindungsgegenstand beispielsweise dargestellt. Es zeigen
- Fig. 1: ein erfindungsgemäßes Holzbauelement aus drei Lagen einander kreuzender Bretter ausschnittsweise in einem schematischen Schrägriß,
- Fig. 2: eine Lage dieses Holzbauelementes ausschnittsweise in einer Draufsicht,
- Fig. 3: eine aus fünf Lagen aufgebaute Konstruktionsvariante eines erfindungsgemäßen Holzbauelementes ausschnittsweise im Querschnitt in einem größeren Maßstab,
- Fig. 4: die Leimfuge zwischen zwei Brettern einer Lage in einem Querschnitt in einem größeren Maßstab und die
- Fig. 5 bis 7: unterschiedliche, jeweils aus fünf Lagen aufgebaute Holzbauelemente nach der Erfindung ausschnittsweise in einem vereinfachten, schematischen Querschnitt.

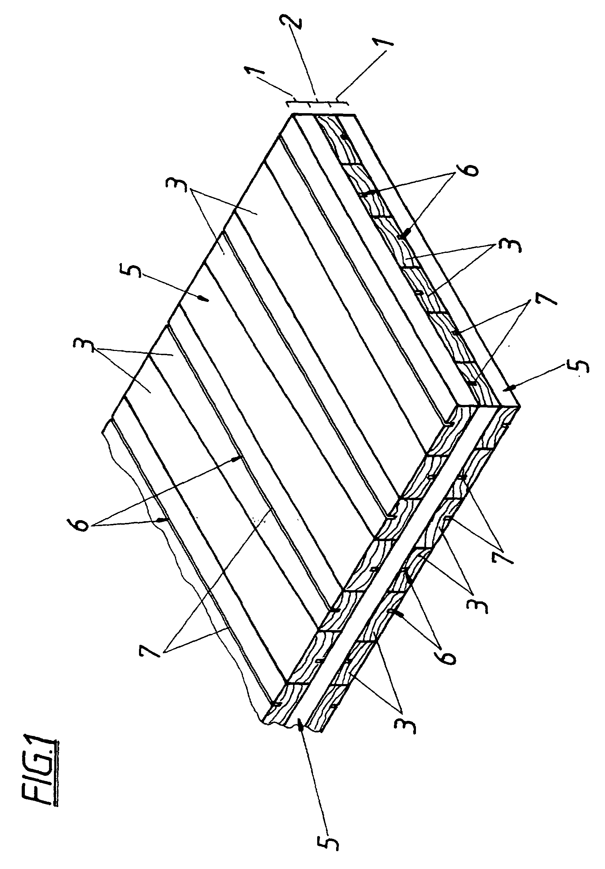

Das Holzbauelement entsprechend der Fig. 1 ist aus drei Lagen 1 und 2 aufgebaut, die jeweils aus gehobelten Brettern 3 zusammengesetzt sind. Diese Bretter sind entsprechend der Stammkonizität in Längsrichtung der Holzfasern konisch geschnitten und verlaufen paarweise entgegengesetzt konisch, so daß jeweils zwei dieser konischen Bretter 3 parallele Außenränder aufweisen. Damit ist es in einfacher Weise möglich, die Bretter 3 entlang ihrer Stoßflächen 4 zu Platten 5 zu verleimen, wie dies in der Fig. 2 dargestellt ist. Diese Platten 5 stellen für sich handhabbare Einheiten dar, aus denen mehrlagige Holzbauelemente in einfacher Weise hergestellt werden können, weil zu diesem Zweck lediglich die an ihren einander zugekehrten Seiten mit einem Leimauftrag versehenen Platten 5 übereinandergelegt und miteinander verpreßt werden müssen, was ohne besonderen maschinellen Einsatz automatisiert durchgeführt werden kann. Da auch die Platten 5 aus den einzelnen Brettern 3 in herkömmlicher Weise maschinell zusammengeleimt werden können, stellen die je eine Lage 1 bzw. 2 bildenden Platten 5 eine vorteilhafte Voraussetzung für eine automatisierte Herstellung von mehrlagigen Holzbauelementen dar.

Da die Verleimung der Bretter 3 entlang ihrer Stoßflächen 4 jedoch den Aufbau von Eigenspannungen über mehrere nebeneinandergereihte Bretter 3 der Platte 5 ermöglicht, könnte es zu das Holzbauelement gefährdenden Spannungsrissen zufolge von Temperatur- und Feuchtigkeitsschwankungen kommen, wenn nicht über die Platte 5 verteilte, in Längsrichtung der Bretter 3 verlaufende Sollrißstellen 6 zumindest auf einer Plattenseite vorgesehen werden. Durch diese Sollrißstellen 6 wird der tragende Querschnitt verringert, so daß höhere Eigenspannungen zu einem Riß der Platte entlang der jeweiligen Sollrißstelle 6 führt, was im Plattenverbund eines Holzbauelementes dessen Tragfähigkeit nicht beeinträchtigt, weil ja die auftretenden Querkräfte durch die anliegenden Bretter der anschließenden Platten abgetragen werden, insbesondere wenn die Bretter 3 der Lagen 1 und 2 abwechselnd kreuzweise verlegt sind.

Die Sollrißstellen 6 sind gemäß dem Ausführungsbeispiel nach der Fig. 1 und 2 als Längsnuten 7 der Bretter 3 ausgebildet. Der gegenseitige Abstand der Längsnuten, ihre Tiefe und ihre Anordnung auf einer oder beiden Plattenseiten bestimmen die Größe der zulässigen Eigenspannungen, so daß über diese Parameter auch Einfluß auf diese Eigenspannungen bei einer entsprechenden Belastung des Holzbauelementes genommen werden kann, und zwar unabhängig von der jeweiligen Brettbreite.

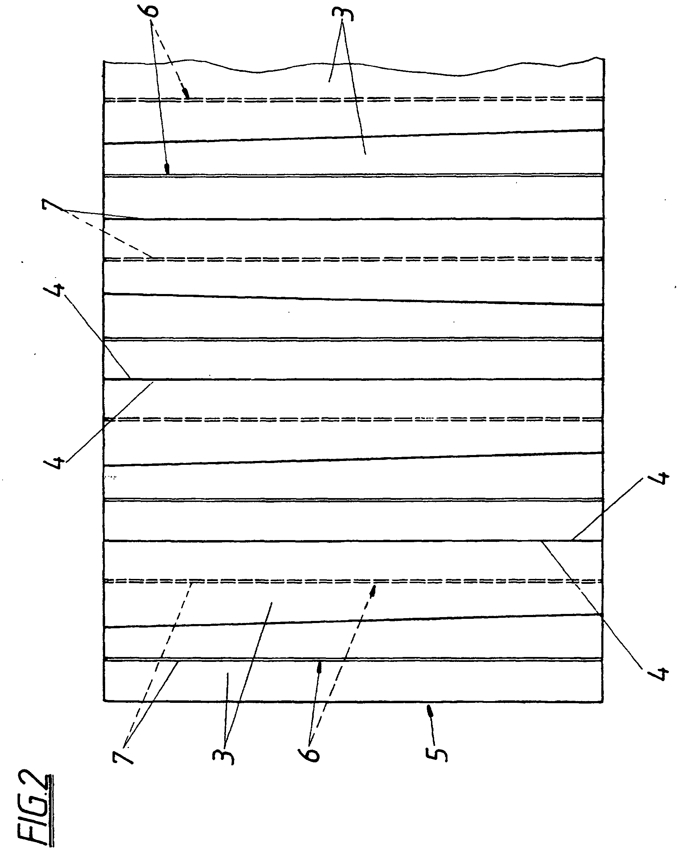

In der Fig. 3, die ein Holzbauelement aus fünf Lagen 1, 2 dargestellt, wobei eine mögliche Anordnung dieser Längsnuten 7 in den einzelnen die Lagen 1, 2 bildenden Platten eingezeichnet ist. Es ist zu erkennen, daß die Bretter 3 der einzelnen Lagen 1 und 2 jeweils die in ihrer Längsrichtung verlaufenden Kräfte aufnehmen werden, nicht aber dazu querverlaufende Zugkräfte, weil der Aufbau von Eigenspannungen quer zur Brettlängsrichtung innerhalb der einzelnen Lagen 1 und 2 zu Sollrissen entlang der Längsnuten 7 führt.

Gemäß der Fig. 4 wird die Sollrißstelle 6 durch die Leimfuge zwischen den nur teilweise miteinander verleimten Stoßflächen 4 nebeneinandergereihter Bretter 3 gebildet. Zu diesem Zweck erfolgt der Leimauftrag nicht über die volle Höhe der Stoßflächen 4, sondern lediglich in einem Streifen 8, dessen Breite kleiner als die Höhe der Stoßflächen 4 ist. Über die Breite dieses Leimstreifens 8 kann wiederum der über die Stoßflächen 4 übertragbare Zugkraftanteil beschränkt werden, so daß es bei einem Anwachsen solcher Querkräfte zu einem Riß im Bereich des Leimstreifens 8 kommt.

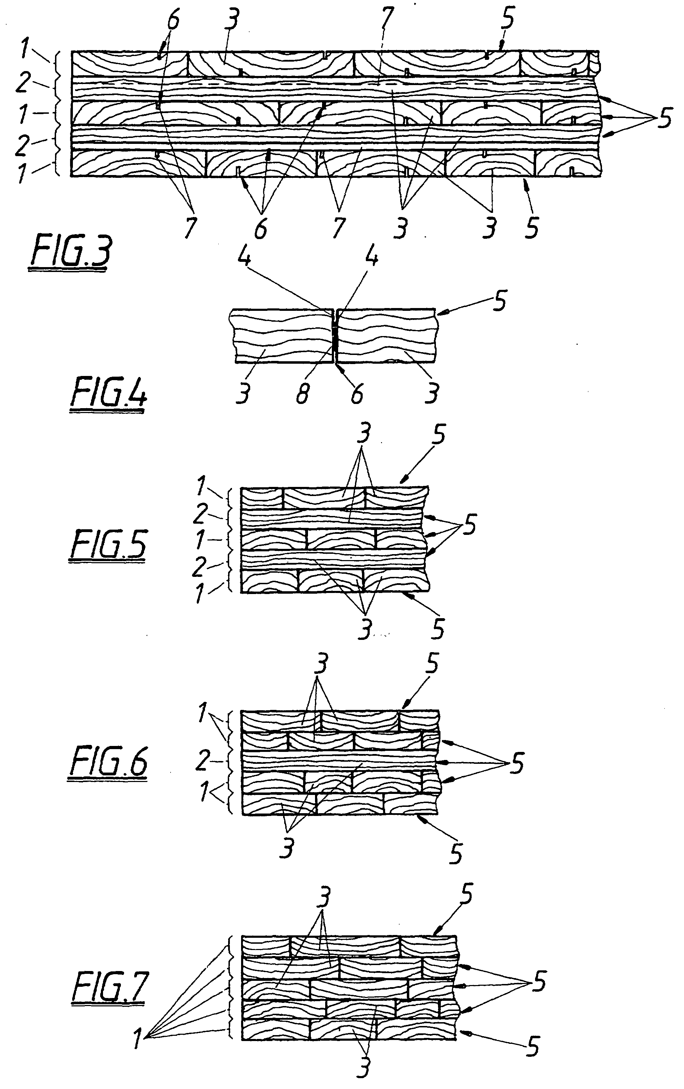

Die erfindungsgemäßen Holzbauelemente können in sehr unterschiedlicher Art und Weise durch Platten 5 aus miteinander verleimten Brettern aufgebaut werden, wie dies die Fig. 5 bis 7 veranschaulichen. Gemäß der Fig. 5 ist eine abwechselnd kreuzweise verlaufende Verlegung der die Lagen 1, 2 bildenden Platten 5 vorgesehen, wobei die Sollrißstellen in den einzelnen Platten 5 aus Übersichtlichkeitsgründen nicht dargestellt sind. Nach der Fig. 6 sind vier Lagen 1 mit übereinstimmender Brettausrichtung mit einer Lage 2 kombiniert, die dazu quergerichtete Bretter 3 aufweist. Entsprechend der Fig. 7 sind lediglich fünf Lagen 1 mit einer einheitlichen Brettausrichtung zu einem Holzbauelement verleimt, das folglich als Träger eingesetzt werden wird. Aufgrund der unterschiedlichen Anordnungen der Platten 5 der einzelnen Lagen 1, 2 und der Anzahl der jeweiligen Lagen lassen sich Holzbauelemente für unterschiedliche Belastungsfälle konstruieren. Werden die einzelnen Platten 5 miteinander vollflächig verleimt, so wird die größtmögliche Belastbarkeit des jeweiligen Holzbauelementes sichergestellt. Ist eine solche hohe Belastbarkeit nicht gefordert, so kann der Leimauftrag auf den Platten 5 nur bereichsweise, beispielsweise in Streifen- oder Netzform erfolgen, so daß beispielsweise die Dampfdiffusion durch diese Holzbauelemente nicht vollkommen unterbunden wird.

## Patentansprüche

1. Holzbauelement aus mehreren miteinander verleimten Lagen (1, 2), die aus nebeneinandergereihten, gehobelten Brettern (3) bestehen, **dadurch gekennzeichnet, daß** die Bretter (3) jeder Lage (1, 2) miteinander entlang ihrer Stoßflächen (4) zu einer Platte (5) verleimt sind, die in Brettlängsrichtung verlaufende Sollrißstellen (6) aufweist, und daß die Sollrißstellen (6) der die einzelnen Lagen (1, 2) bildenden Platten (5) durch Leimfugen zwischen den nur teilweise miteinander verleimten Stoßflächen (4) nebeneinandergereihter Bretter (3) gebildet sind.

2. Holzbauelement nach Anspruch 1, **dadurch gekennzeichnet, daß** die Platten (5) der einzelnen Lagen (1, 2) streifen- oder netzförmig miteinander verleimt sind.

3. Holzbauelement nach Anspruch 1 oder 2, **dadurch gekennzeichnet, daß** die entsprechend einer Stammkonizität in Längsrichtung der Holzfasern parallel zur Konusachse geschnittenen Bretter (3) der einzelnen Lagen (1, 2) abwechselnd entgegengesetzt trapezförmig verlaufen.

## Claims

1. A wooden building element made up of a number of glued-together layers (1, 2) consisting of planed boards laid alongside one another, **characterised in that** the boards (3) in each layer (1, 2) are glued together along their abutting edges (4) to form a panel (5) which has set cracking places (6) in the longitudinal direction of the boards, and the set cracking places (6) of the panels (5) forming the individual layers (1, 2) are produced by gaps in the gluing between the abutting surfaces (4) of adjoining boards (3).

2. A wooden building element according to claim 1, **characterised in that** the panels (5) in the individual layers (1, 2) are glued together in strips or networks.

3. A wooden building element according to claim 1 or 2, **characterised in that**, corresponding to an original conicity in the longitudinal direction of the wood fibres, the boards (3) in the individual layers (1, 2) are cut parallel to the cone axis and are trapezoidal, extending alternately in opposite directions.

## Revendications

1. Elément de construction en bois formé de plusieurs couches (1, 2) collées ensemble, constituées de planches (3) rabotées, alignées en rangée les unes à côté des autres, **caractérisé en ce que** les planches (3) de chaque couche (1, 2) sont collées ensemble, le long de leurs faces de joint (4), pour former une plaque (5) qui présente des points destinés au déchirement (6) s'étendant dans la direction longitudinale des planches, et **en ce que** les points destinés au déchirement (6) des plaques (5) formant les différentes couches (1, 2) sont formés par des joints de collage entre les faces de joint (4), collées ensemble seulement partiellement, des planches (3) alignées en rangée les unes à côté des autres.

2. Elément de construction en bois selon la revendication 1, **caractérisé en ce que** les plaques (5) des différentes couches (1, 2) sont collées ensemble en forme de bandes ou de filets.

3. Elément de construction en bois selon la revendication 1 ou 2, **caractérisé en ce que** les planches (3), coupées de manière correspondante à une conicité de tronc, dans la direction des fibres de bois parallèlement à l'axe de cône, des différentes couches (1, 2), s'étendent en forme de trapèzes alternés de façon opposée.
